# EUROPEAN PATENT SPECIFICATION

(11) **EP 3 722 561 B1**
(45) Date of publication and mention of the grant of the patent: **18.01.2023**
(21) Application number: 20166420.8
(22) Date of filing: 27.03.2020
(51) Int. Cl.: F01D 11/00, F01D 11/02, F01D 5/00, F16J 15/3268

(54) **STEAM TURBINE ROTOR AND STEAM TURBINE**
DAMPFTURBINENROTOR UND DAMPFTURBINE
ROTOR DE TURBINE À VAPEUR ET TURBINE À VAPEUR

(30) Priority: 11.04.2019 JP 2019075409
(43) Date of publication of application: 14.10.2020
(73) Proprietor: Mitsubishi Heavy Industries, Ltd., Chiyoda-ku, Tokyo 100-8332 (JP)
(72) Inventor: OIKAWA, Shinji, Yokohama-shi, Kanagawa 220-8401 (JP); IZUMI, Takeshi, Yokohama-shi, Kanagawa 220-8401 (JP); SATO, Jun, Yokohama-shi, Kanagawa 220-8401 (JP); SEGAWA, Kiyoshi, Yokohama-shi, Kanagawa 220-8401 (JP); YANASE, Yuta, Tokyo, 100-8332 (JP)
(74) Representative: MERH-IP Matias Erny Reichl Hoffmann Patentanwälte PartG mbB

(56) References cited:
- EP-A1- 1 152 124
- JP-A- 2006 152 954
- JP-A- 2009 216 047
- JP-A- 2017 115 917
- US-A1- 2012 093 633

## Description

### TECHNICAL FIELD

The present invention relates to a steam turbine rotor including an embedded fin as well as to a steam turbine.

### BACKGROUD OF THE INVENTION

The steam turbine is provided with a seal fin in order to prevent leakage of steam (working fluid) from a clearance defined between an inner periphery of a stationary body and an outer periphery of a rotary body (rotor).

As the seal fin disposed on the rotor, in particular, there are two types of a skived fin formed by machining the rotor and an embedded fin fixed in a groove formed in the rotor.

Of these fins, the embedded fin has a replaceable structure. When an edge of the embedded fin is damaged, therefore, the damaged fin can be replaced with a new one which enables the rotor to recover a sealing performance. However, the embedded fin is not integrally formed with the rotor. In a case where the drawing strength of the embedded fin is below a centrifugal force of the rotor, the embedded fin may be scattered. That is, the embedded fin must be enhanced in the drawing strength in order to improve the reliability of the steam turbine.

The background art of the technical field of the invention is set forth in Japanese Patent Application Laid-Open No. 2017-115917 (Patent Literature 1). Patent Literature 1 discloses a seal fin which includes: a bottom part disposed in a fixing groove in a manner to extend in a groove width direction of the fixing groove; and a fin part upstanding from a first end with respect to the groove width direction of the fixing groove toward an opening of the fixing groove so as to control the circulation of the working fluid. The bottom part is formed with a bent portion at a base thereof in a manner that the bent portion protrudes toward the first end, while the bottom part is formed with a first slant plane at the other end thereof in a manner that the first slant plane is directed to the opening of the fixing groove when the bottom part is placed in the fixing groove. The bent portion is locked to a croze in the fixing groove while the first slant plane is locked by a locking piece.
According to Patent Literature 1, the structure is adapted to prevent the seal fin from disengaging from the fixing groove.
Patent Literature 2 (JP 2009 216047 A) discloses a method of coating a turbine which comprises a rotor, rotatably arranged inside a casing. One of the opposite surfaces of the casing and the rotor is formed with a seal fin groove, and embedding type seal fins and are embedded in the seal fin groove, and the embedding type seal fin is caulked by a caulking wire so as to form a seal fin part.
Patent Literature 3 (EP 1 152 124 A1) discloses a fluid machine with sealed off gaps between movable and stationary structural parts.
Patent Literature 4 (US 2012093633 A1) discloses a turbomachine seal assembly including a plurality of sealing strips, which are configured and are disposed to inhibit a flow of fluid from passing through a channel defined by a first member and a second member.
Patent Literature 5 (JP 2006 152954 A) discloses a seal fin, which is planted in a fin fixing groove provided on one or both of a moving part or a stationary part of a steam turbine.

### SUMMARY OF THE INVENTION

Patent Literature 1 describes that the seal fin is prevented from disengaging from the fixing groove.

However, because of high temperatures of the steam turbine and the large diameter of a rotor shaft, the embedded fin is required of further enhanced drawing strength than before.

In this connection, the present invention provides a steam turbine rotor and a steam turbine which feature an embedded fin having an excellent drawing strength to cope with, for example, further rise in steam temperature, further increase in the diameter of the rotor shaft and the like.

The problem is solved by the appended claims. In particular, a steam turbine rotor as set forth in claim 1.

A steam turbine according to an aspect of the present invention includes such a steam turbine rotor.

According to the present invention, there is provided a steam turbine rotor and a steam turbine which include an embedded fin having an excellent drawing strength to cope with the further rise in steam temperature, further increase in the diameter of the rotor shaft, and the like.

The foregoing and other objects, components, and advantageous effects of the present invention will become more apparent from the following description of the embodiments thereof.

### BRIEF DESCRIPTION OF THE DRAWINGS

Fig. 1 is a schematic diagram illustrating an embedded fin without a croze according to an embodiment of the present invention.
Fig. 2 is a schematic diagram illustrating an embedded fin including the croze according to the embodiment hereof.
Fig. 3 is a schematic diagram illustrating a steam turbine according to the embodiment hereof.

### DETAILED DESCRIPTION

The embodiments of the present invention will hereinbelow be described with reference to the accompanying drawings, in which like reference numerals refer to the same or similar components. Those components are explained only once in some cases to avoid repetitions.

### First Embodiment

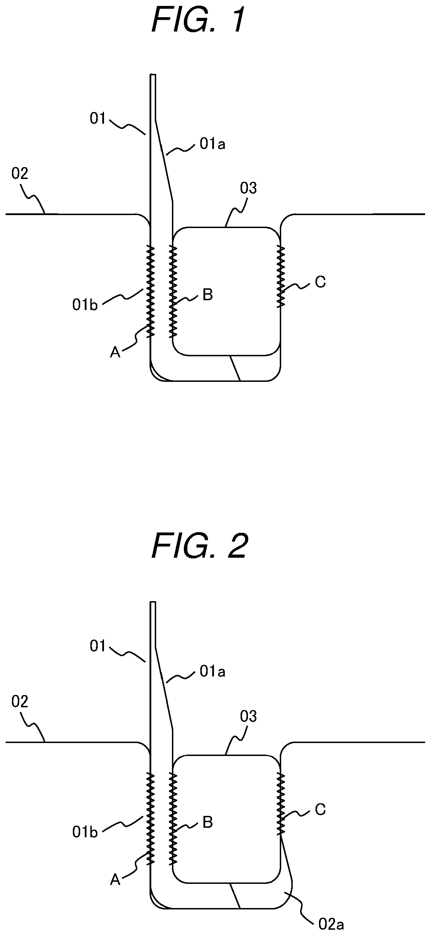

Fig. 1 is a schematic diagram illustrating an embedded fin without a croze described herein, which is shown in section.

A steam turbine is provided with a seal fin in order to prevent the leakage of steam (working fluid) through a clearance formed between an inner periphery (not shown) of a stationary body and a rotary body (steam turbine rotor)(hereinafter, referred to as "rotor") 02.

As the seal fin disposed on the rotor, in particular, there are two types which include: a skived fin formed by machining the rotor; and an embedded fin fixed in a groove formed in the rotor.

The seal fin described in this embodiment is the embedded fin. Because of a replaceable configuration, an embedded fin 01 can be replaced with a new embedded fin 01 for recovery of sealing performance in a case where an edge of the fin is damaged.

The embedded fin 01 described in the embodiment is formed by longitudinally bending an end of a metal sheet having a thickness on the order of 0.5 to 1.0 mm, longitudinal sides, and transverse sides so as to form an L-shaped workpiece (in section). The L-shaped workpiece in section is longitudinally worked to form an arc-like shape. When the L-shaped workpiece is arcuately bent in the longitudinal direction, the work piece is finally bent into a ring shape by using a radius die conforming to an outer peripheral curved plane of the rotor 02.

The L-shaped structure by L-bending can be formed by bending a plate material or by spinning. A method of forming a workpiece by skiving a raw material is also applicable to form the L-shaped structure.

In order to be assembled to the rotor 02, this embedded fin 01 has a ring structure which is segmented in a circumferential direction of the rotor 02. It is preferred that the ring structure is equally divided into two to four segments. This is because the smaller the number of gaps between the embedded fin segment 01 and the embedded fin segment 01, the greater is the effect to prevent the steam leakage. The embedded fin 01 is also improved in processability by dividing the ring structure into equal segments.

The embedded fins 01 are axially mounted to the rotor 02 in multiple tiers (e.g., 2 to 10 tiers). Thus, the steam is prevented from leaking through clearance between a rotor blade (rotary body) and a stator vane (stationary body).

The embedded fin 01 according to the embodiment includes a bent bottom part and an upright part (part extended in an outer circumferential direction), having the L-shape as seen in section.

From a viewpoint of enhanced sealing performance, the embedded fin 01 according to the embodiment has a structure where a fin tip 01a has a smaller thickness than that of a fin root 01b, as seen in section. A thin portion of the fin tip 01a can be formed by rolling press or skiving.

As just described, the upright part of the embedded fin 01 has the fin tip 01a and the fin root 01b.

After assembled to the rotor 02, the embedded fin 01 is processed by a lathe turning machine or the like such that the fin has a predetermined outside diameter at the edge thereof. For this reason, the embedded fin 01 is formed with an excess thickness at the edge thereof. The cross-section of the embedded fin 01 may also have an I-shape, U-shape, or the like, other than the L-shape.

On the other hand, a fixing groove 04 for fixing the embedded fin therein is formed in an outer periphery of the rotor 02 along the whole circumference thereof. It is preferred for this fixing groove 04 to have a ratio of width (axial width of the rotor 02) to depth in the rage between 1:2 or more and 1:4 or less. This configuration ensures an excellent drawing strength of the fin.

The fin tip 01a of the embedded fin 01 is a portion longer than a depth of the fixing groove 04. The fin root 01b of the embedded fin 01 is a portion shorter than the depth of the fixing groove 04. It is preferred that the bottom part of the embedded fin 01 is shorter than the width of the fixing groove 04.

The embedded fin 01 is fixed in the fixing groove 04 by inserting the fin root 01b of the embedded fin 01 into the fixing groove 04, and inserting a locking strip 03 from above the embedded fin 01 (from an outer peripheral side of the fin) followed by press-fitting the locking strip 03 in the groove. The press-fitting of the locking strip 03 is continued till the locking strip 03 is lowered from a surface of the rotor 02 by a predetermined range of subduction amount.

A press-fitting method is exemplified by the use of air hammer or roller. However, any method that can achieve sufficient plastic deformation of the locking strip 03 is usable.

While a material of the embedded fin 01 and the locking strip 03 varies depending upon the use environment, it is a general practice to use carbon steel or stainless steel.

In the rotor 02 according to the embodiment, the embedded fin 01, which includes the bent bottom part, and the upright part including the fin tip 01a and the fin root 01b, is inserted in the fixing groove 04 and fixed in the fixing groove 04 by means of the locking strip 03.

The drawing strength of the embedded fin 01 significantly depends upon static frictional forces between respective pairs of the embedded fin 01 and the locking strip 03, the embedded fin and the rotor 02 formed with the fixing groove 04, and the locking strip 03 and the rotor, which are in contacting relation with one another.

According to the invention, a static friction coefficient (A) between a side surface of the fixing groove 04 and a side surface of the fin root 01b (outside surface of the upright part); a static friction coefficient (B) between a side surface of the locking strip 03 and a side surface of the fin root 01b (inside surface of the upright part); and a static friction coefficient (C) between the side surface of the fixing groove 04 and the side surface of the locking strip 03 are increased by roughening the surfaces. The embedded fin 01 is increased in the drawing strength in this manner.

A method of increasing the static friction coefficient is, for example, a blast treatment. The side surface of the fin root 01b, the side surface of the fixing groove 04 and the side surface of the locking strip 03 can be roughened by injecting a hard material such as steel shot, glass beads or sand to such surfaces so that the static friction coefficients thereof can be increased. Another method of increasing the static friction coefficient is, for example, knurling.

The blast treatment on the side surface of the fin root 01b may be performed at any time. However, if the surface roughness is increased at any part (e.g., the fin tip 01a) other than the fin root 01b, it could result in the decrease in fatigue strength or sealing performance at such parts. Therefore, these parts are masked before the blast treatment is performed.

Similarly, the blast treatment is also performed on the side surface of the locking strip 03 so that the locking strip 03 is increased in the static friction coefficient at its contact parts with the side surface of the fin root 01b and the side surface of the fixing groove 04. Thus, the embedded fin 01 is increased in the drawing strength.

As compared with a case where the surfaces are not roughed (e.g., a static friction coefficient at contact area between the side surface of the fin root 01b and the side surface of the fixing groove 04: 0.4 to 0.5), the embodiment can increase the static friction coefficient to 0.5 or more, thus enhancing the drawing strength of the embedded fin 01.

Out of these static friction coefficients A, B, C in particular, it is preferred to maximize the coefficient A. This leads to an even greater improvement in the drawing strength of the embedded fin 01.

According to the embodiment, the side surface of the fin root 01b (outer side of the upright part) has greater surface roughness than the side surface of the fixing groove 04. Further, the side surface of the locking strip 03 has greater surface roughness than the side surface of the fixing groove 04. Thus, the drawing strength of the embedded fin 01 can be improved even further.

The embodiment can provide a steam turbine rotor including the (highly strengthened) embedded fin having an excellent drawing strength to cope with further rise in steam temperature, further increase in the diameter of the rotor shaft, and the like. The embodiment is adapted to enhance the reliability of the steam turbine employing such a steam turbine rotor.

### Second Embodiment

Fig. 2 is a schematic diagram illustrating an embedded fin with a croze described herein, which is shown in section.

This embodiment differs from the first embodiment in that the fixing groove 04 has a croze 02a. Specifically, a rotor 02 according to the embodiment differs from that of the first embodiment in that the fixing groove 04 has the croze 02a.

As described, the embodiment includes the croze 02a in the fixing groove 04 such that the locking strip 03 gets into this croze 02a, thus further enhancing the drawing strength of the embedded fin 01.

### Third Embodiment

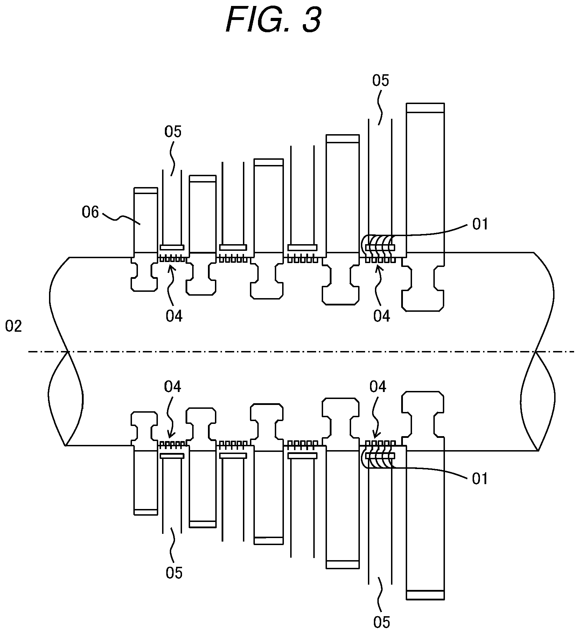

Fig. 3 is a schematic diagram illustrating a steam turbine according to an embodiment hereof.

A steam turbine according to this embodiment includes: the rotor 02; a rotor blade 06 mounted to the rotor 02; a stator vane 05; and an embedded seal fin part 04.

The stator vane 05 operates to produce kinetic momentum in a rotational direction by imparting a velocity energy to steam by expanding the steam while changing the direction of the steam flow.

The embedded seal fin part 04 is provided with an embedded seal fin 01. The embedded seal fin 01 is so assembled as to inhibit the leakage of steam from clearance between an edge of the stator vane 05 and the rotor 02.

The rotor blade 06 is mounted to the rotor 02 and operates to convert a thermal energy of the steam into a rotational energy of the rotor 02.

The embodiment can provide a steam turbine enhanced in reliability by mounting the embedded fin 01 according to the first or second embodiment to such a rotor 02 of the steam turbine. Namely, the steam turbine according to this embodiment includes the rotor 02 according to the first or the second embodiment hereof.

The above-described invention is not limited to the foregoing embodiments but can include a variety of modifications within the scope of the appended claims.

### List of Reference Signs

- 01: embedded fin
- 01a: fin tip
- 01b: fin root
- 02: rotor
- 02a: croze
- 03: locking strip
- 04: embedded seal fin
- 05: stator vane

- 06: rotor blade

## Claims

1. A steam turbine rotor (02) having a seal fin comprising, a fixing groove (04) which is formed in an outer periphery of the rotor (02), an embedded fin (01) which is the seal fin, and which includes: a bent bottom part; and an upright part including a fin tip (01a) and a fin root (01b), and which is inserted in the fixing groove and fixed in the fixing groove by means of a locking strip (03) ;
**characterized in that**
a static friction coefficient (A) between a side surface of the fixing groove (04) and a side surface of the fin root (01b), a static friction coefficient (B) between a side surface of the locking strip (03) and a side surface of the fin root (01b), and a static friction coefficient (C) between the side surface of the fixing groove (04) and the side surface of the locking strip (03) are increased by roughening the surfaces.

2. The steam turbine rotor (02) according to Claim 1,
wherein, of the static friction coefficient (A) between the side surface of the fixing groove (04) and the side surface of the fin root (01b), the static friction coefficient (B) between the side surface of the locking strip (03) and the side surface of the fin root (01b), and the static friction coefficient (C) between the side surface of the fixing groove (04) and the side surface of the locking strip (03), the static friction coefficient (A) between the side surface of the fixing groove (04) and the side surface of the fin root (01b) is the largest, out of the static friction coefficients (A, B, C).

3. The steam turbine rotor (02) according to Claim 2,
wherein the fixing groove (04) has a width-to-depth ratio of 1:2 or more and 1:4 or less.

4. The steam turbine rotor (02) according to Claim 1,
wherein the side surface of the fin root (01b) has a larger surface roughness than the side surface of the fixing groove (04).

5. The steam turbine rotor (02) according to Claim 1,
wherein the side surface of the locking strip (03) has a larger surface roughness than the side surface of the fixing groove (04).

6. The steam turbine rotor (02) according to Claim 1,
wherein the fixing groove (04) includes a croze (02a) .

7. A steam turbine comprising the steam turbine rotor (02) according to Claim 1.

8. The steam turbine rotor (02) according to Claim 1,
wherein roughening the surfaces is a blast treatment or a knurling.

## Patentansprüche

1. Dampfturbinenrotor (02) mit einer Dichtungsrippe, der Folgendes umfasst: eine Befestigungsnut (04), die in einem Außenumfang des Rotors (02) gebildet ist, eine eingebettete Rippe (01), die die Dichtungsrippe ist und die Folgendes enthält: einen gebogenen Bodenabschnitt; und einen aufrecht stehenden Abschnitt, der eine Rippenspitze (01a) und eine Rippenwurzel (01b) umfasst und der in die Befestigungsnut eingesetzt ist und mittels einer Verriegelungsleiste (03) in der Befestigungsnut befestigt ist;
**dadurch gekennzeichnet, dass**
ein Haftreibungskoeffizient (A) zwischen einer Seitenfläche der Befestigungsnut (04) und einer Seitenfläche der Rippenwurzel (01b), ein Haftreibungskoeffizient (B) zwischen einer Seitenfläche der Verriegelungsleiste (03) und einer Seitenfläche der Rippenwurzel (01b) und ein Haftreibungskoeffizient (C) zwischen der Seitenfläche der Befestigungsnut (04) und der Seitenfläche der Verriegelungsleiste (03) durch Aufrauen der Oberflächen erhöht sind.

2. Dampfturbinenrotor (02) nach Anspruch 1,
wobei von dem Haftreibungskoeffizienten (A) zwischen der Seitenfläche der Befestigungsnut (04) und der Seitenfläche der Rippenwurzel (01b), dem Haftreibungskoeffizienten (B) zwischen der Seitenfläche der Verriegelungsleiste (03) und der Seitenfläche der Rippenwurzel (01b) und dem Haftreibungskoeffizienten (C) zwischen der Seitenfläche der Befestigungsnut (04) und der Seitenfläche der Verriegelungsleiste (03) der Haftreibungskoeffizient (A) zwischen der Seitenfläche der Befestigungsnut (04) und der Seitenfläche der Rippenwurzel (01b) der größte der Haftreibungskoeffizienten (A, B, C) ist.

3. Dampfturbinenrotor (02) nach Anspruch 2,
wobei die Befestigungsnut (04) ein Verhältnis von Breite zu Tiefe von 1:2 oder größer und 1:4 oder kleiner aufweist.

4. Dampfturbinenrotor (02) nach Anspruch 1,
wobei die Seitenfläche der Rippenwurzel (01b) eine größere Oberflächenrauigkeit als die Seitenfläche der Befestigungsnut (04) aufweist.

5. Dampfturbinenrotor (02) nach Anspruch 1,
wobei die Seitenfläche der Verriegelungsleiste (03) eine größere Oberflächenrauigkeit als die Seitenfläche der Befestigungsnut (04) aufweist.

6. Dampfturbinenrotor (02) nach Anspruch 1,
wobei die Befestigungsnut (04) eine Zarge (02a) enthält.

7. Dampfturbine, die den Dampfturbinenrotor (02) nach Anspruch 1 umfasst.

8. Dampfturbinenrotor (02) nach Anspruch 1,
wobei das Aufrauen der Oberflächen eine Strahlbehandlung oder eine Rändelung ist.

## Revendications

1. Rotor de turbine à vapeur (02) ayant une ailette de joint d'étanchéité comprenant une rainure de fixation (04) qui est formée dans une périphérie extérieure du rotor (02), une ailette enchâssée (01) qui est l'ailette de joint d'étanchéité, et qui inclut : une partie de fond cintrée ; et une partie verticale incluant une pointe d'ailette (01a) et une racine d'ailette (01b), et qui est insérée dans la rainure de fixation et fixée dans la rainure de fixation au moyen d'une bande de verrouillage (02) ;
**caractérisé en ce que**
un coefficient de friction statique (A) entre une surface latérale de la rainure de fixation (04) et une surface latérale de la racine d'ailette (01b), un coefficient de friction statique (B) entre une surface latérale de la bande de verrouillage (03) et une surface latérale de la racine d'ailette (01b), et un coefficient de friction statique (C) entre la surface latérale de la rainure de fixation (04) et la surface latérale de la bande de verrouillage (03) sont augmentés en rendant rugueuses les surfaces.

2. Rotor de turbine à vapeur (02) selon la revendication 1,
dans lequel, parmi le coefficient de friction statique (A) entre la surface latérale de la rainure de fixation (04) et la surface latérale de la racine d'ailette (01b), le coefficient de friction statique (B) entre la surface latérale de la bande de verrouillage (03) et la surface latérale de la racine d'ailette (01b), et le coefficient de friction statique (C) entre la surface latérale de la rainure de fixation (04) et la surface latérale de la bande de verrouillage (03), le coefficient de friction statique (A) entre la surface latérale de la rainure de fixation (04) et la surface latérale de la racine d'ailette (01b), est le plus grand des coefficients de friction statique (A, B, C).

3. Rotor de turbine à vapeur (02) selon la revendication 2,
dans lequel la rainure de fixation (04) a un rapport largeur sur profondeur de 1:2 ou plus et de 1:4 ou moins.

4. Rotor de turbine à vapeur (02) selon la revendication 1,
dans lequel la surface latérale de la racine d'ailette (01b) a une rugosité de surface plus grande que la surface latérale de la rainure de fixation (04).

5. Rotor de turbine à vapeur (02) selon la revendication 1,
dans lequel la surface latérale de la bande de verrouillage (03) a une rugosité de surface plus grande que la surface latérale de la rainure de fixation (04).

6. Rotor de turbine à vapeur (02) selon la revendication 1,
dans lequel la rainure de fixation (04) inclut un jable (02a).

7. Turbine à vapeur comprenant le rotor de turbine à vapeur (02) selon la revendication 1.

8. Rotor de turbine à vapeur (02) selon la revendication 1,
dans lequel l'opération consistant à rendre rugueuses les surfaces est un traitement par sablage ou un moletage.
